Europäisches Patentamt

European Patent Office

Office européen des brevets

(19)

(11) Publication number: **0 407 182 A2**

# EUROPEAN PATENT APPLICATION

(12)

(21) Application number: 90307338.5

(22) Date of filing: 05.07.90

(51) Int. Cl.⁵: **H01G 9/20, H01M 14/00**

(30) Priority: 05.07.89 US 376070

(43) Date of publication of application:
09.01.91 Bulletin 91/02

(84) Designated Contracting States:
AT BE CH DE DK ES FR GB GR IT LI LU NL SE

(71) Applicant: WISCONSIN ALUMNI RESEARCH
FOUNDATION
614 North Walnut Street
Madison, WI 53705(US)

(72) Inventor: O'Ryan, Brian
Chemin des Cypres 4

CH-1800 Vevey(CH)
Inventor: Kikkawa, Hirofumi
1-25-17 Hesaka Kurumegi, Higashi-ku
Hiroshima City(JP)
Inventor: Anderson, Anderson A.
2114 Chadbourne Avenue
Madison, Wisconsin(US)

(74) Representative: Ellis-Jones, Patrick George
Armine et al
J.A. KEMP & CO. 14 South Square Gray's
InnInn
London WC1R 5LX(GB)

(54) Photoelectrical cells using metal oxide ceramic membranes.

(57) A photoelectrochemical cell is made from a pair of electrodes placed in an ionic salt solution. The photoresponsive electrode is a metal oxide semiconducting ceramic membrane. The advantageous porosity, and thus increased surface area, of the membrane make a solar cell of this design more efficient due to the larger contact area between the metal and the ionic solution than crystalline electrodes. Such titanium dioxide membranes are also transparent which allows for the stacking of electrodes or cells, including electrodes designed to absorb radiation at different wavelengths to again increase overall efficiency of light absorption. Dyes can be added to the membrane to achieve absorption of light at desired bandwidths. A dopant, such as niobium, can be added to a titanium oxide membrane to increase conductivity without any accompanying loss of conductivity.

FIG. 1

EP 0 407 182 A2

# PHOTOELECTROCHEMICAL CELLS USING METAL OXIDE CERAMIC MEMBRANES

### Field of the Invention

The present invention relates, in general, to the creation of photoelectric cells to generate electricity from sunlight, and relates, in particular, to photoelectrochemical cells in which the incident sunlight is used in a catalytic process to generate electric potential.

### Background of the Invention

Much research and effort has been directed toward the creation of devices which will convert sunlight or other forms of incident light into electricity. Much of the research has been directed toward the creation of semi-conductor films or chips, typically formed of silicon or gallium arsenide, which create electrical potential by virtue of incoming photons energizing electrons to cross a potential barrier between semi-conductor materials of different dopant. Such solid state photovoltaic cells have been under development for many years and are used in specialized applications where the cost of electricity generated or stored by other means would be high.

Another category of device for generating electricity from sunlight is a photoelectrochemical cell. Such a photoelectrochemical solar cell includes a catalytic semi-conductor electrode immersed in an ionic liquid. Such photoelectrochemical cells have been previously constructed with crystalline electrodes of titanium oxide or similar metallic oxide materials, which act as semi-conductors. While the titanium dioxide and similar metal oxide polycrystalline materials are attractive because they are chemically stable, their band width is too large to allow utilization of the visible part of the solar spectrum.

It has been previously demonstrated that a photoelectrochemical cell can be constructed using a polycrystalline titanium dioxide electrode. In addition, such polycrystalline materials have been deposited in the form of well-crystallized anatase titanium on a micro cracked surface, such as disclosed by Allman et al. Chemical Physics Letters 141:1, 2:154-158 (1987). In creating photoelectrochemical cells utilizing an electrode of a polycrystalline titanium oxide, it has also been demonstrated that the band width of the incident radiation absorbed by the electrode can be significantly altered by sensitizing the titanium dioxide electrode with certain dyes. An example of such a process was demonstrated by Kalyanasundaram et al. J. Phys. Chem. 91:2342-2347 (1987). The dye used in that photoelectrochemical cell wae a water-soluble anionic porphyran and the electrode used was a polycrystalline anatase titanium dioxide layer. The proceee of creating the polycrystalline titanium dioxide electrode, as disclosed by Kalyanasundaram et al. results in a microcrystalline titanium dioxide layer. The titanium dioxide layer has a yellow color, poor integrity and exhibits a micro-cracked rough surface.

Another approach to the creation of titanium dioxide materials is directed toward the creation of ceramic films or layers, referred to as metal oxide ceramic membranes. Such membranes can be prepared either as particulate membranes in which a web of particles are sintered or fused to each other to create a porous body or can be polymeric in which the titanium dioxide molecules form an inorganic polymeric planar material which is essentially non-porous. Such ceramic materials can be sintered at relatively high temperatures, i.e. up to $500^\circ$ C to form very durable and practicable titanium dioxide layers which can be utilized for a variety of purposes.

### Summary of the Invention

The present invention is summarized in that a photoelectrochemical solar cell includes therein as one electrode thereof a metal oxide ceramic membrane which hae been sensitized by a dye so as to be a receptor of incident solar radiation.

It is a further object of the present invention to provide an optically transparent electrode for such a photoelectrochemical cell so that multiple electrodes utilizing different parts of the solar spectrum, depending upon the dye adsorbed onto the electrode, can be created.

It is yet another object of the present invention to provide such a photoelectrochemical solar cell in which the metal oxide semi-conductor membrane is doped with a dopant different in valence value from the principle metal of the membrane so as to improve the conductivity of the porous ceramic membrane to facilitate electron flow therethrough and increase overall efficiency of the photoelectrochemical solar cell.

Other objects, advantages, and features of the present invention will become apparent from the following specification when taken in conjunction with the accompanying drawings.

## Brief Description of the Drawings

Fig. 1 is a schematic illustration of a photocell constructed in accordance with the present invention.

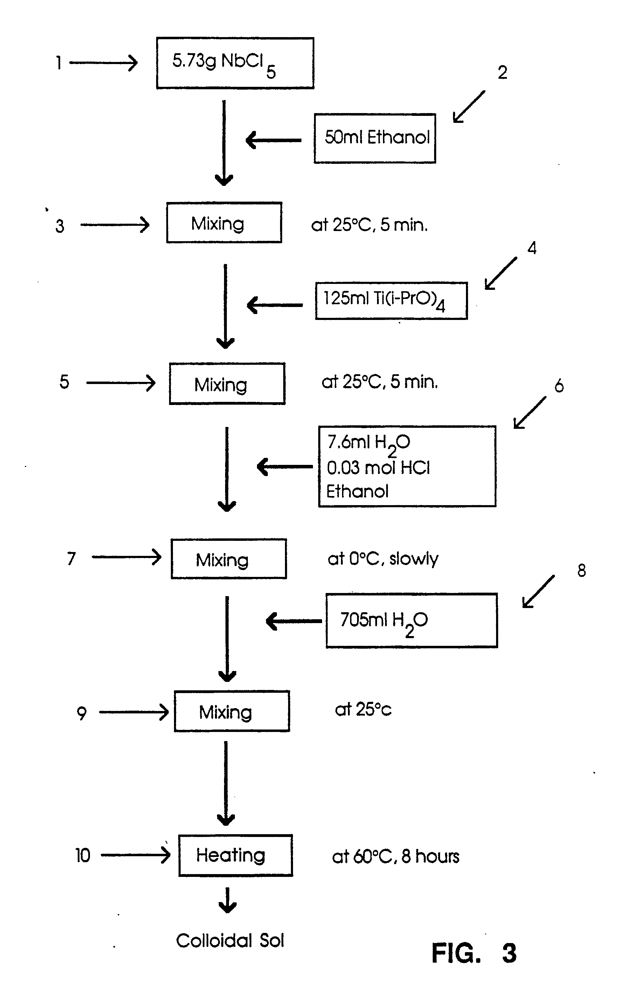

Fig. 2 illustrates the photocell described in the experimental example of the specification below.

Fig. 3 illustrates the method of constructing a niobium doped titanium ceramic membrane useful within the photoelectrochemical solar cell constructed in accordance with the present invention.

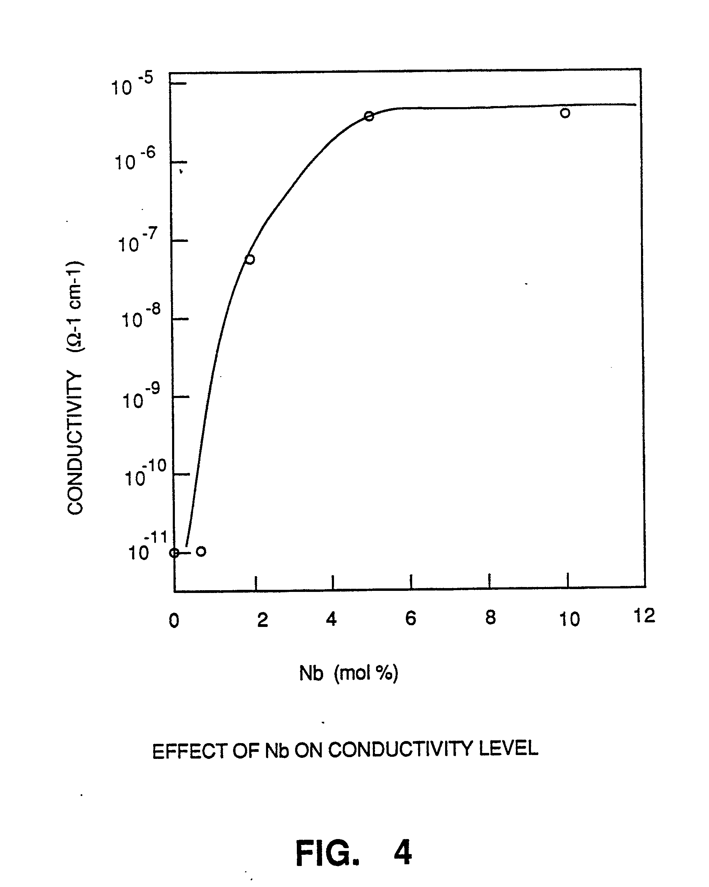

Fig. 4 illustrates the improved conductivity of the niobium doped titanium ceramic membrane thus indicating its increased utility as an electrode in a photoelectrochemical cell constructed in accordance with the present invention.

## Detailed Description of the Invention

The present invention is generally directed toward the creation of photoelectrochemical cells utilizing metal oxide ceramic membranes. The use of such semiconductor metal oxide membranes, with or without dye sensitization, allows the creation of photoelectrochemical cells which can generate electricity from incident solar or other forms of optical radiation.

A membrane for use in the present invention is a porous metal oxide ceramic film either deposited on a support or created in an unsupported fashion so as to have structural integrity by itself. The membrane should be semiconducting. It is advantageous if the membrane is both highly porous to allow a large surface area of contact between the electrode and the fluid in which it is placed and also advantageously as a high conductivity to facilitate efficient electron transfer out of the electrode and into the circuitry connected to the cell.

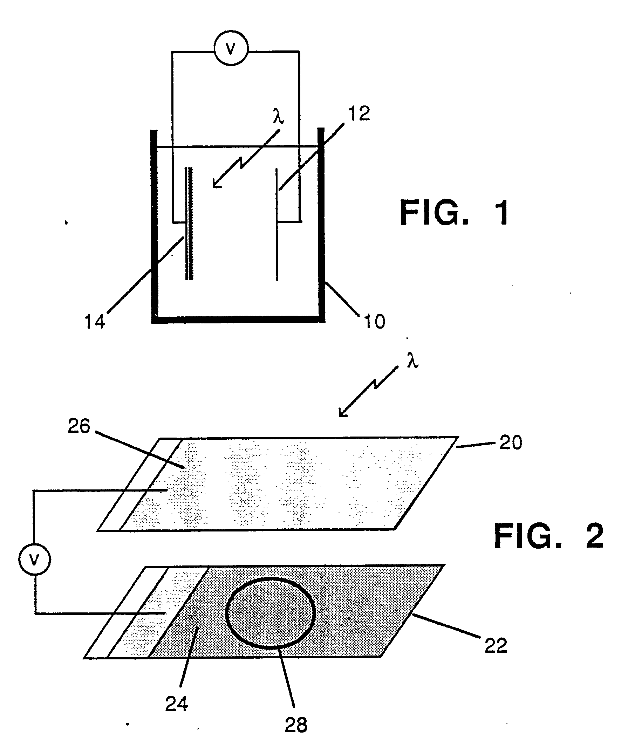

Shown schematically in Fig. 1 is the illustration of a standard photoelectrocell constructed in accordance with the present invention. This cell is constructed as it would appear assembled in a beaker or other container of electrolyte. The container is illustrated at 10. The electrolyte contained in the beaker is a suitable electrolyte which can be reduced at one electrode and oxidized at the other so that charge transfer can occur. One such suitable electrolyte is sodium iodide with a trace of iodine added.

There are two electrode supports 12 and 14 placed in the cell. The electrode support 12 is intended for a counter-electrode. The counter-electrode can be a suitable, durable non-oxidizing metallic electrode supported on some kind of a physically rigid support. A suitable support for a counter-electrode could be a glass layer, such as a glass slide, and a suitable counter-electrode would be a platinum foil or perhaps a platinum or tin oxide layer coated onto a glass support.

The other support 14 is intended to support and contact the metal oxide ceramic membrane indicated at 16. The metal oxide ceramic membrane is a porous ceramic material which may optionally have an organic or inorganic dye absorbed therein to change the band width of its energy absorption characteristic. The preferred materials for the metal oxide ceramic membranes include titanium dioxide particulate ceramic membranes, with or without dye sensitization and titanium dioxide ceramic membranes with niobium doping for increased conductivity.

The use of particulate metal oxide ceramic membranes as electrode surfaces and electrophotochemical cells offer significant advantages over other forms of semiconductors for use as such electrodes. Because of the porous nature of particulate ceramic membranes, they have a very high surface area to the electrolyte compared to other forms of metal oxide films, such as notably polycrystalline films. It is also advantageous that metal oxide ceramic membranes can be fabricated to be transparent. The use of transparent membranes allows the membranes, or even the entire photocells, to be stacked one on top of the other without the lower cells being deprived of incident sun light. The use of multiple electrodes or multiple cells allows configuratione in which different electrodes or different cells are custom tailored to absorb incident sun light of certain wavelengths with the members in the same stack having complementary wavelength ranges of absorption. Thus, it is possible to have a unsensitized titanium dioxide ceramic membrane which absorbs an ultraviolet above a similar titanium dioxide membrane which has been dye sensitized to be responsive in the visible portion of the spectrum so that the upper membrane absorbs ultraviolet light and the lower membrane absorbs light in the visible portion of the spectrum. By varying the dye which is adsorbed on the metal oxide ceramic membrane, the light absorption can be custom configured to the particular layered device that is found most appropriate in the given installation.

The present invention can best be understood by the following examples which are intended as illustrative and not in any way in a limiting sense.

## Example 1

Titanium dioxide colloidal solutions were prepared by hydrolysis of a titanium alkoxide Ti(OCH)-

CH$_3$)$_2$)$_4$ as follows. Under a stream of dry nitrogen, 125 milliliters of the titanium alkoxide was added to a 150 milliliter dropping funnel containing 20 milliliters of anhydrous isopropanol. The mixture was added over 10 minutes to 750 milliliters of distilled de-ionized water while being stirred vigorously. Nitrogen was supplied to the dropping funnel. During the hydrolysis, a white precipitant was formed in the solution. Within 10 minutes of the alkoxide addition, 7.3 milliliters of 70% nitric acid was added to the hydrolysis mixture while continuing vigorous stirring. The mixture was then stirred for 8 hours at an elevated temperature of approximately 80° C. The isopropanol and some water was allowed to evaporate during this temperature elevation period. Approximately 700 milliliters of stable titanium dioxide colloidal sol resulted.

The sol was recovered and using a rotary evaporator, a 500 milliliter portion of the titanium dioxide sol was concentrated at 30° C in approximately 30 mm mercury until 100 milliliters of a viscous liquid remained. In some replicates of the procedure, before concentration the sol was sonicated in a polycarbonate bottle using a probe-type sonicator until no further increases in clarity were noted. Glass sides to be coated with the membrane were cleaned in detergent (Alconox), rinsed in de-ionized water, wiped and rinsed in acetone, and finally rinsed in de-ionized water. For a coated surface of approximately 5 times 2 centimeters, 0.5 milliliters of concentrated sol was spread across the surface of a clean glass slide. The slide was then spun at approximately 3000 rpm for 8 to 60 seconds depending on the desired thickness and the sol viscosity. The resulting gel layer was then dried for at least 30 minutes at room temperature and then fired in air at 400° C for 1 hour (ramp rate 4° C per minute). The resulting supported titanium dioxide particulate ceramic membranes were 0.05 to 0.5 microns in thickness, optically transparent, and with care could be made to vary less than 5% in thickness over 4 centimeters. Although layers thicker than 0.5 microns in a single application tend to crack when fired, as many as 10 uncracked layers have been applied by alternately spin coating and firing and layers less than 0.5 microns thick. Such supported titanium dioxide ceramic membranes have been applied to fused silica, glass, TCO glass (Pyrex with a transparent conductive tin oxide layer), graphite and several metals.

TCO glass slides (Corning or Asahi) with two layers of a titanium dioxide ceramic membrane were fired in argon at 550° as follows: The slides were placed in a 25 millimeter diameter Pyrex tube in a Lindberg tube furnace. The ends of the tube were closed, well outside the heated area, with silicon rubber stoppers containing gas inlet and outlet connections. A chromel/alumel thermacouple probe was inserted through the down stream stopper and held within 5 millimeters of the titanium dioxide surface by a Pyrex insert that also served to limit the exchange of gases from the heated area at either end. The membranes were fired at approximately 440° C in still air for 20 minutes after which the tube was purged for 30 minutes with 1000 milliliters per minute of argon. The argon flow was reduced to 500 milliliters per minute and the temperature was raised to 550° C at 10° C per minute and held for one and one-half hours. The argon was cleaned with a water absorber and two oxygen traps (Alltech) before use. The membranes were cooled quickly by removing the whole tube from the furnace and circulating room air around it.

To make a dye sensitized titanium dioxide film, an excess of Phenylflourone dye (Kodak) was soaked in 20 milliliters of methanol for several hours. The resulting solution was filtered through a paper filter and diluted by half with fresh ethanol. A titanium dioxide membrane on a TCO glass slide was placed in the dye solution for several hours. The membrane took on a red/brown color which did not wash out with repeated rinsing in ethanol. Courmarin 343 dye (Kodak) has been similarly absorbed from ethanol solution and RuL$_3$ (L = 2,2'-bipyridyl-4,4'-dicarboxylate) from a pH3 water solution. The dyed membranes can be used as is in the photoelectrochemical cell described below or they can be briefly pre-soaked in an aqueous solution of acid or base to change the surface charge of the membrane and thue the open circuit potential of the cell. All dyes could be removed by soaking the membrane in 0.01 molar potassium hydroxide and the membrane could then be redyed with a different or the same dye.

The photoelectric chemical properties of the membranes were measured using a potentiostat and a 3 electrode cell. The cell was a Pyrex beaker 10 such as illustrated in Fig. 1 containing 0.5 molar sodium iodide in ethanol with a trace of iodine added. Oxygen was removed by purging with nitrogen. A silver/silver chloride reference electrode (not shown) was used and a counter electrode 12 of either platinum foil or a platinum layer deposited onto TCO glass slide was used. Mild stirring was maintained, although the current did not seem to be sensitive to stirring in a three electrode configuration. The membrane 14 was illuminated either by a monochromatic beam at approximately 850 microwatte per square centimeter at 436 nanometer wavelength or by white light from a tungsten halogen projector bulb passed through a 420 nanometer cut off filter. Light intensity was measured with a silicon photodiode optometer. Current flow was detected indicating photoelectrochemical generation of electric potential, measured at 16, resulting from charge separation at the membrane.

Example 2

Titanium dioxide particulate ceramic membranes were prepared as in accordance with Example 1 above. The photoelectrochemical cell was constructed by clamping together two TCO slides 20 and 22, one of which has a dye sensitized membrane layer 24 thereon and the other of which serves as a platinum counter electrode 26. The two slides were separated by a 1.5 milimeter thick O-ring 28, which was 25 millimeters in diameter. The center of the O-ring 28 was filled with saturated sodium iodide in ethanol and various concentrations of iodine. Some of the dye used was added to the solution for some replications of the example. Oxygen was removed from the solution prior to use by purging with nitrogen. Cells of the configuration were illuminated as in Example 1 above and also with incident sun light. The illumination was provided through the back of the TCO holding the dye sensitive membrane since the high levels of dye iodine could on occasion absorb light. Significant photovoltaic energy wae detected caused by charge separation at the titanium dioxide particulate ceramic membrane.

Example 3

A photoelectrochemical cell was constructed as in accordance with Example 2 above. Another similar photoelectrochemical cell was also constructed but without the dye sensitization and with a 0.1 molar potassium hydroxide solution separating the electrodes. The second cell was placed in front of the dye sensitized cell in place of the 420 nanometer filter used in Example 1 above. The two cells were then connected in parallel. Again the flow of electrical energy could be detected in an amount greater than achieved by the dye sensitized photoelectrochemical cell by itself indicating the validity of stacking the electrodes and photoelectrochemical cells to make custom cells for a particular applications of incident radiation.

Example 4

This example is intended to make use of a titanium dioxide particulate ceramic membrane which is doped with niobium. The niobium is intended to increase the conductivity of the ceramic membrane so as to increase its overall efficiency and use as an electrode in the photoelectrochemical cell. The beginning materials utilized were niobium pentachloride and titanium tetraisopropoxide. Also used as a starting material is anhydrous ethanol. The chemicals were used as purchased without further purification, and all water used in the reactions was deionized using a Mili-q water purification system as sold by Milipore Corp. The process began with the selection of the molar ratio between water and titanium dioxide and also the ratio of dopant contained in the titanium matrix. Having selected a molar ratio between water and titanium dioxide of 99 to 1, and a molar ratio of atoms of titanium to niobium of 100 to 5, the procedure utilized began with the mixing of 5.73 gram of niobium pentachloride into 50 milliliters of anhydrous ethanol. The solution was then stirred for 5 minutes at room temperature to dissolve the niobium dopant salt. To the solution was then added 125 milliliters of titanium tetraisopropoxide. Again the reaction vessel was stirred for 5 minutes at room temperature as shown at 5. Shown in Fig. 1 is a schematic illustration of a flow chart illustrating this process. At Fig. 1 the process begins with the niobium pentachloride at step 1 with the ethanol added at step 2, and the mixing at 3. The titanium isopropoxide was added at step 4.

Next, to this reaction solution was added in a sequence of slow drops, 108 milliliters of a solution which contained 7.6 milliliters of water, 0.03 molar hydrochloric acid and ethanol, as shown at 6 while cooling the solution with ice to approximately 0° C. After the addition of the peptizing acid was complete, 750 milliliters of water dilutent was added, while vigorously stirring the solution until it turned transparent. This dilution of the reaction vessel is necessary to obtain proper dilution of the niobium in the resulting colloid. This is indicated at 8 in the flow sheet of Fig. 1.

Thereafter the solution was mildly heated to 60° C for 8 hours while continuous stirring occurred as illustrated at step 9.

This solution turned during the heated stirring 10 into a colloidal solution. Various runs of the colloidal solutions were coated onto glass and fired while others were dried in a plastic petri dish to form an unsupported membrane in the bottom of the petri dish. In any event, the colloidal concentrations thus formed, referred to as gels, were then fired at temperatures up to 500° C to form a stable, hard and durable ceramic membranes.

This process of preparing the titanium ceramic membranes with the niobium doping was repeated with a niobium doping level which varied from 0 to 10% molar niobium of the total metal in the ceramic membrane.

The titanium dioxide particulate ceramic membrane conetructed with a niobium doping wae found to have a level of electrical conductivity which was at least one and as many as five orders of magnitude greater in electrical conductivity than a titanium dioxide ceramic particulate membrane without the niobium doping.

Hypothetically, such a niobium doped titanium ceramic membrane can be inserted for the undoped titanium dioxide ceramic membrane illustrated in Examples 1 to 3 above, whether dyed or not dyed. The resulting photoelectrochemical cells should have increased in efficiency and greater recovery of electrical energy therefrom due to the increased conductivity efficiency of the particulate ceramic membrane.

The photocurrent generated by the niobium-doped titanium ceramic membranes, based on absorption in the ultraviolet, has been compared to that for non-doped titanium dioxide membrane. It has been found that the doped membrane results in a higher induced level of photocurrent, suggesting that it would increase efficiency in the photoelectrochemical cell when dyed to operate in the visible spectrum as well.

It is to be understood and appreciated that the foregoing examples and specification are by way of illustration and not limitation and the invention embodies all such forms thereof as come within the scope of the following claims.

## Claims

1. A photoelectrochemical cell comprising a housing adapted to contain a quantity of a solution of an ionic salt;
a counter electrode of a conducting metal in the housing;
a support in the housing for a second semiconducting electrode, the support formed of a conductive material;
conductors adapted to connect the electrodes to an external electrical circuit; and
a semiconductor electrode on the support, the semiconductor electrode formed of a transparent metal oxide porous ceramic membrane which is capable of catalytically using incident radiation to induce charge separation of the ions in the ionic salt solution at the second electrode so that a potential is created between the first and second electrodes.

2. A photoelectrochemical cell as claimed in claim 1 wherein the housing is formed of glass.

3. A photoelectrochemical cell as claimed in claim 1 or 2 wherein the counter electrode is formed of platinum.

4. A photoelectrochemical cell as claimed in claim 3 wherein counter electrode is formed as a conductive layer on a support, the conductive layer being vapor deposited platinum.

5. A photoelectrochemical cell as claimed in any one of claims 1 to 4 wherein the metal oxide porous membrane is formed of titanium dioxide.

6. A photoelectrochemical cell as claimed in claim 5 wherein the titanium dioxide membrane is formed of titanium dioxide.

7. A photoelectrochemical cell as claimed in any one of claims 1 to 6 wherein the metal oxide is particulate.

8. A photoelectrochemical cell as claimed in any one of claims 1 to 7 wherein the ceramic membrane has a dye absorbed in it to increase the light absorption bandwidth of the photoresponsive electrode.

9. A photoelectrochemical cell as claimed in claim 8 wherein the dye is a phenylflourone dye.

10. A photoelectrochemical cell as claimed in any one of claims 1 to 9 wherein the supports and counter electrode are transparent.

11. A photoelectrochemical cell as claimed in claim 10 wherein the transparent supports are glass.

12. A photoelectrochemical cell as claimed in any one of claims 4 to 11 wherein each of the supports have a conductive layer on its interior surface facing the other support.

FIG. 1

FIG. 2

1 ⟶ | 5.73g NbCl$_5$ |

2 ↘

| 50ml Ethanol | ⟶

3 ⟶ | Mixing |   at 25°C, 5 min.

4 ↘

⟵ | 125ml Ti(i-PrO)$_4$ |

5 ⟶ | Mixing |   at 25°C, 5 min.

6 ↘

⟵ | 7.6ml H$_2$O<br>0.03 mol HCl<br>Ethanol |

7 ⟶ | Mixing |   at 0°C, slowly

8 ↙

⟵ | 705ml H$_2$O |

9 ⟶ | Mixing |   at 25°c

10 ⟶ | Heating |   at 60°C, 8 hours

↓

Colloidal Sol

**FIG. 3**

EFFECT OF Nb ON CONDUCTIVITY LEVEL

FIG. 4